# EUROPEAN PATENT SPECIFICATION

(11) **EP 2 825 358 B1**
(45) Date of publication and mention of the grant of the patent: **02.12.2015**
(21) Application number: 13725199.7
(22) Date of filing: 25.04.2013
(51) Int. Cl.: B29C 43/00, B29C 43/52, B29C 33/10, B29C 44/04, B29C 43/02

(54) **A PRESSURE-FORMING PROCESS FOR THERMOPLASTIC OBJECTS**
PRESSFORMVERFAHREN FÜR THERMOPLASTISCHE KUNSTSTOFFGEGENSTÄNDE
PROCÉDÉ DE FORMAGE PAR PRESSION POUR OBJETS THERMOPLASTIQUES

(30) Priority: 27.04.2012 IT RE20120033
(43) Date of publication of application: 21.01.2015
(73) Proprietor: C.G.M. S.P.A., 42015 Correggio (Reggio Emilia) (IT)
(72) Inventor: PARMIGIANI, Corrado Saverio, I-42015 Correggio (Reggio Emilia) (IT)
(74) Representative: Corradini, Corrado
(86) International application number: PCT/IB2013/000773
(87) International publication number: WO 2013/160752

(56) References cited:
- WO-A1-2011/048477
- WO-A1-2012/095692
- DE-U1- 29 700 226
- FR-A1- 2 888 526
- GB-A- 1 556 170
- US-A- 5 525 283
- US-A- 5 705 203
- US-A1- 2006 008 629

## Description

### TECHNICAL FIELD

The present invention relates to compression-forming of objects made of thermoplastic material.

The compression forming process of the invention is performed using a die comprising:
a bottom die (female) having a die cavity suitable for containing a batch of material in a form of small pieces,
a punch (male), mobile with respect to the bottom die,
an air escape route from the bottom die.

The process comprises:
a) inserting a batch of material in a form of small pieces in the cavity of the bottom die
b) nearing the two parts of the die to one another, reducing a volume of the cavity up to a minimum amount in which a forming chamber is defined that determines the shape of the object,
c) supplying heat to the particles of the batch, during step b), by heating the internal surfaces of the chamber of the bottom die and the punch with which the particles come into contact, increasing a degree of fluidity thereof with growing values over a period of time, starting from a minimum value at the start of step b) up to a maximum amount, at the end of step b).

### BACKGROUND ART

An example of this technology is described in patent publication US2002/17742.

An advantage of this process in relation to a traditional and consolidated process is in the energy saving and lower pressures used, which enables use of much less sturdy and expensive equipment and lower energy costs. Further, the compression-forming process enables realising objects having relatively large size. For example, it is practically possible to realise flat objects (panels) having surfaces of greater than .1 square metre; on the contrary, these products are not practically realisable by means of injection moulding as they would require very expensive and large machines and would present complex and often-insurmountable problems of realisation.

A drawback of the above-described process is in the difficulty encountered in performing a complete evacuation of the interstitial air present between the particles in the cavity of the material introduced into the die. The interstitial air which cannot exit from the die remains captured inside the object formed, primarily compromising the mechanical and geometric characteristics thereof (a slab containing too much air, if subjected to heating, tends to lose the geometric characteristics thereof); further, if small bubbles remain close to the external surface of the object, even the outward appearance thereof is damaged.

The entity of this drawback is related to the plane shape of the cavity of the bottom die.

A partial solution to this technical problem is suggested in patent document DE 29700226U in which a die is disclosed for compression-forming of an object made of thermoplastic material in the form of a slab having a large surface and a relatively very small thickness, wherein:
the cavity of the bottom die is delimited by a lower internal surface facing upwards, which defines the lower base of the cavity, and an internal lateral surface, facing towards the central zone of the cavity,
the (male) punch exhibits an internal surface which defines the upper base of the cavity, facing downwards,
an escape route is provided for the air from the bottom die cavity, at a peripheral zone of the punch where the punch, at the end of the reciprocal nearing step of the punch and the bottom die, closes the cavity of the bottom die, defining the forming chamber.

In this prior document, the bottom die exhibits a tubular frame, added for reinforcing the structure, which surrounds the upper edge of the cavity; a liquid is inserted in this edge, which during the heating of the die, by means of external heating means, vaporises and maintains the temperature of the lateral wall of the lower die bottom die lower with respect to the temperature of the lower base of the bottom die. This temperature difference prevents, according to the document, the exiting of the material, now in liquid form, through the escape route, leaving the escape route of the air free.

The phenomenon described in the prior document doubtless facilitates the evacuation of the air from the die, however in a very limited way: it has been experimentally found that especially in forming of generally plate-shaped objects, having a relatively large plan extension (in particular bigger than one square metre) and a thickness that is relatively much smaller, relevant quantities of air tend to remain imprisoned in the central part of the bottom die at an intermediate distance between the two base surfaces, lower and upper, and it is not possible to evacuate it even with what is described in document DE 29700226U.

Further, the die described in this document, due to the external frame, has volumes and weights that are often unacceptable, as well as a complex and laborious functioning for supplying the liquid internally of the reinforcing frame.

WO 2012095692 of the same applicant discloses a punch and a bottom die having a cavity for containing a batch of material of small pieces. Evacuation of interstitial air by applying differential heating to achieve heat delay is not known from this document.

### DISCLOSURE OF THE INVENTION

The aim of the invention is to obviate the drawbacks described in the prior art and realise an effective and substantially more complete evacuation of the interstitial air from the cavity of the bottom die.

This and other aims are attained by the invention as it is disclosed in the appended claims.

According to the invention, the particles located at the upper internal surface of the cavity of the bottom die are brought to fluidity values that grow over time with a delay with respect to the particles located closed to the lower internal surface. Consequently, in step c) of the forming process, the thermoplastic material starts to liquefy starting from the zone closest to the lower internal surface, thus forming a layer R located resting on the lower internal surface, which progressively increases the thickness thereof in an upwards direction. Therefore the interstitial air, which was present originally in the layer which liquefies, is pushed, by the effect of the liquefaction, progressively towards the upper layer of material, where the granules have not yet been liquefied and thus enable passage of the air towards the escape route. The upper level of the liquid layer R that grows progressively displaces towards the upper internal surface and the interstitial air always manages, up to the final instants, to escape towards the escape route, across the particles of the layer N that are not yet molten.

The process of the invention preferably comprises the use of compact thermoplastic material, where the expression "compact" refers to a thermoplastic material that is neither spongy nor foam (therefore not, for example, foam polystyrene, foam polyurethane, etc.), without cells containing air, having a density of greater than 0.9 Kg/dm³.

The process uses a die provided with one or more forming cavities internally of which the granules of plastic material are directly deposited and are preferably pre-heated, without however losing their looseness with respect to one another.

The granules can be made of a selection of various polymers; for example it is possible to mix polyethylene with polyamide or polystyrene.

### BRIEF DESCRIPTION OF THE DRAWINGS

The invention is set out in detail in the following with the aid of the accompanying figures.
Figure 1 is a section (schematic) according to a vertical plane, of a die of the invention, together with means (schematic) for heating thereof.
Figures from 2A to 2D show a portion of figure 1, in successive positions during the step of reciprocally nearing the male and the female parts.
Figures from 3A to 3D show corresponding details of figures from 2A to 2D.
Figure 4 is a graph in which two curves illustrate the different behaviour of two particles, Pa and Pb, located respectively in zone close to the upper internal surface 21 and in zone B, close to the upper internal surface 11.
Figure 5 is a section (schematic) according to a vertical plane, of a second embodiment of the die of the invention.

### BEST MODE FOR CARRYING OUT THE INVENTION

The compression forming process of the invention is performed using a die M comprising:
a bottom die 10 having a die cavity 15 suitable for containing a batch of material in a form of small pieces,
a punch 20, mobile with respect to the bottom die 10,
an air escape route F from the bottom die 10.

The process comprises:
a) inserting a batch of material D in a form of small pieces in the cavity of the bottom die 10,
b) nearing the two parts of the die (bottom die 10 and punch 20) to one another, reducing a volume of the cavity 15 up to a minimum amount in which a forming chamber is defined that determines the shape of the object,
c) supplying heat to the particles of the batch, during step b), by heating the internal surfaces of the chamber of the bottom die 10 and the punch 20 with which the particles come into contact, increasing a degree of fluidity (known in the sector with the acronym MFI: melt flow index) thereof with growing values over a period of time, starting from a minimum value at the start of step b) up to a maximum amount, at the end of step b).

The die exhibits an air escape route of the interstitial air defined at a peripheral zone of the punch where the punch, at the end of step b) closes the bottom die cavity defining the forming chamber; more precisely, the air escape route F is defined by the small hole present between the guide surface, in reciprocal sliding of the punch 20 and the bottom die 10: i.e. a vertical lateral surface 26 located at the periphery of the internal surface of the punch and a lateral surface 16 located close to the mouth of the cavity 15 of the vertical bottom die which is coupled with the surface 26 and is slidable in relation thereto. The two surfaces 16 and 26 are located in contact with one another with a sliding coupling that enables translation of the punch with respect to the bottom die, and between them is a small amount of play which serves for the reciprocal sliding: as is known, along the plane of the two surfaces 16 and 26, the interstitial air present in the cavity 15, which during the reciprocal nearing step of the punch 20 to the bottom die 10 is placed under pressure, finds an effective escape route F.

The cavity 15 of the bottom die 10 is delimited by an internal surface 11 facing upwards, which defines the lower base of the cavity, and a lateral internal surface 12, facing towards the central zone of the cavity. The punch 20 comprises a first upper internal surface 21, facing downwards, which defines the upper base of the bottom die cavity. The upper and lower internal surfaces 21 and 11 are opposite and able to be neared during step b).

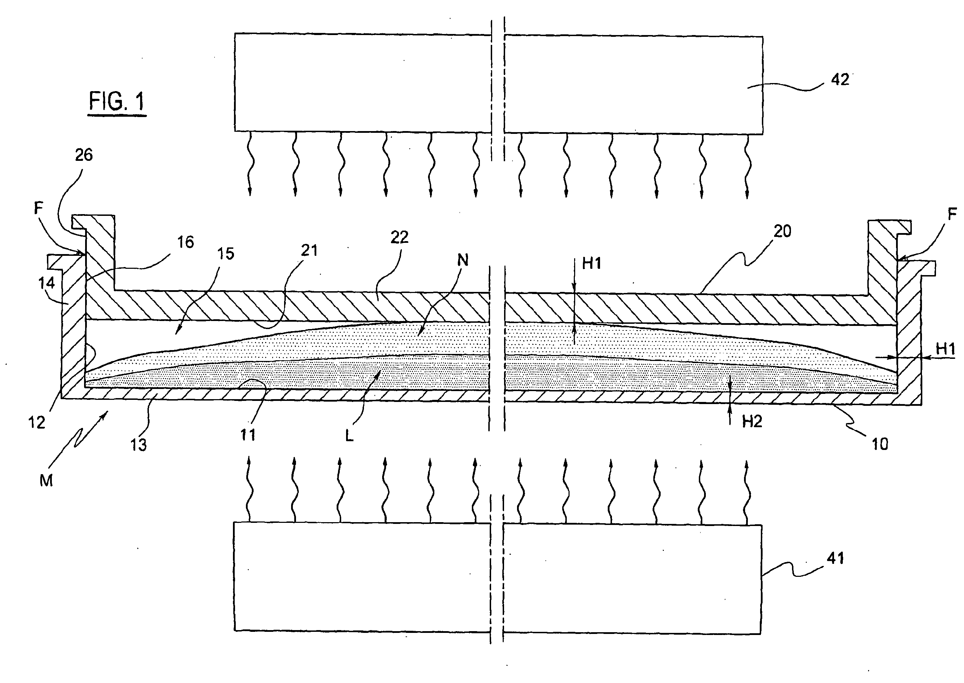

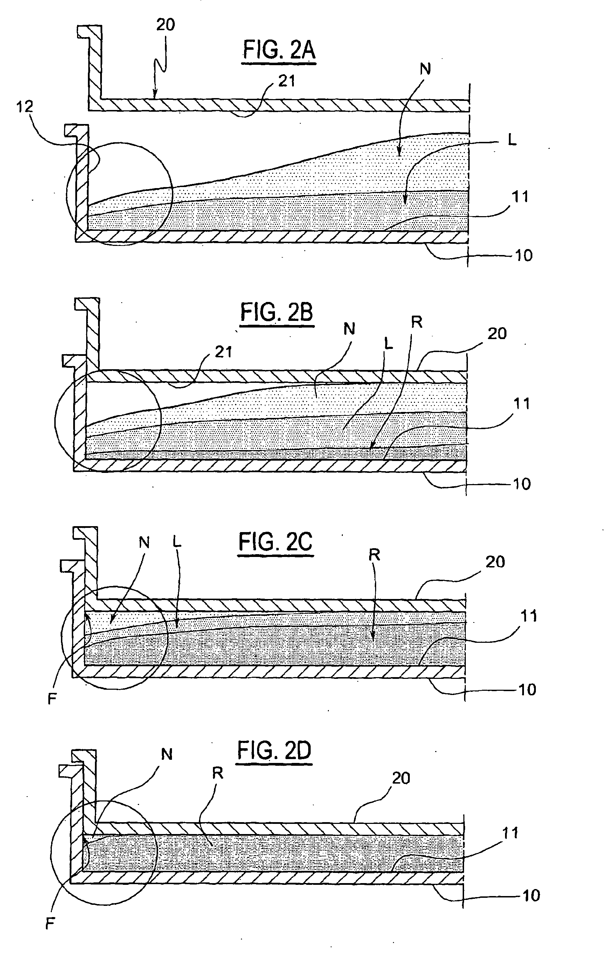

In accordance with the embodiment of the die M illustrated in figures 1 and 2, the punch 20 comprises, internally of the cavity 15, a single active surface 21, which defines the upper base of the cavity; the bottom die 10, in addition to the surface 11 that defines the lower base of the cavity 15, also includes a vertical lateral surface 12 which defines the lateral face of the cavity 15, which, at the upper end, defines the sliding surface 16.

Heat is supplied to the particles of the batch through the internal surfaces 11, 21 with which the particles are in contact, which are heated. The supply of heat to the particles of the batch located in the bottom die cavity is such that they increase their melt flow index (MFI) during the time in which the step of reciprocal approach of punch and bottom die is performed.

According to the invention, during step c) the process comprises heating, in a differentiated manner, the particles of the batch located near the upper internal surface of the punch 20 so that they are brought to higher fluidity values over time with a delay with respect to the particles located near the lower internal surface 11 of the bottom die 10.

According to a first embodiment of the invention, during step a) the process comprises: arranging a layer of particles of the batch in the form of larger granules N at the upper internal surface 21 of the punch, and vice versa a layer of particles L of the batch in the form of smaller granules is located at the lower internal surface 11 of the bottom die.

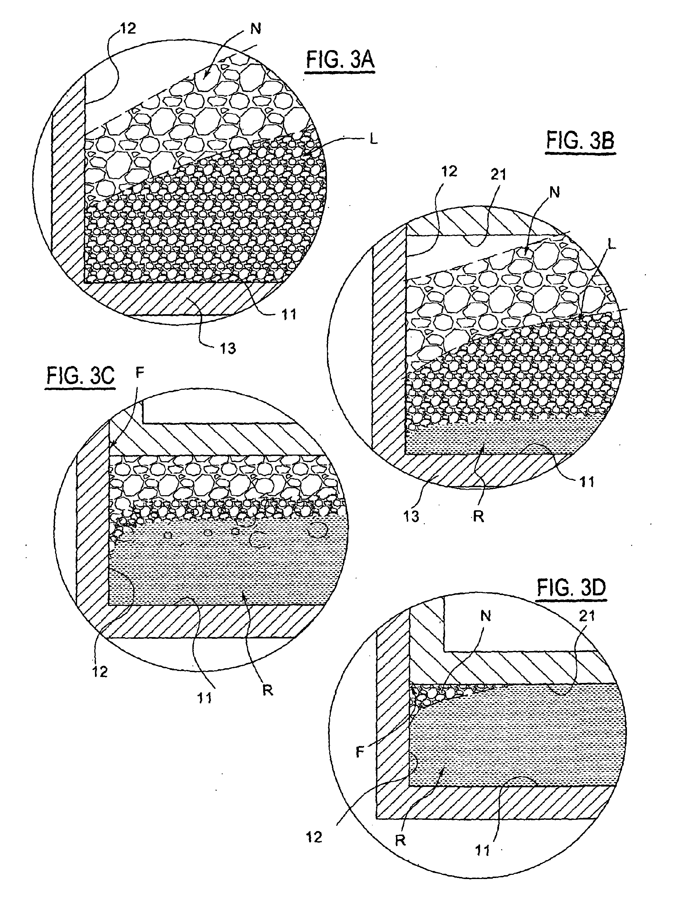

In practice, with the die open, a first layer of smaller granules L is distributed on the lower internal surface 11 and above this a second layer of larger granules N (step shown in figures 2A and 3A) is arranged; this layer of granules N, during step b) of the nearing of the punch to the bottom die 10, is in contact with the upper internal surface 21.

During step c), while providing the two internal surfaces 11 and 21 with the same amount of heat, i.e. by heating the two internal surfaces 11, 21 of the bottom die to the same temperature, the layer of granules L, located in the furthest area, closest to the upper surface 21, fluidizes more quickly compared to the granules located in the zone, in particular because the granules L, being smaller, have a greater heat exchange surface, for a given mass, compared to the larger granules N, and also because, as the volume of the batch arranged within the bottom die is roughly lenticular in shape (see figure 1) (given that the particulate material is released by gravity into the central area of the bottom die), the lowest layer of granules L is in contact with the entire surface 11 from the start, while on the contrary the upper surface 21 is in contact with the upper layer of granules N, first with only the central zone thereof which, during step b) progressively increases the area of contact thereof up to occupying, only in the final phase of step b), the entire area of the surface 21.

Therefore, during step b), the particles L of the lower layer are brought to fluidity values more rapidly than the particles N of the upper layer and in addition this phenomenon is expanded, particularly in the upper layer, starting from the central area of the surface 21, with a direction facing the air escape F. In other words, the particles of the batch are heated in a differentiated manner during step b) such that the particles positioned in zones of the cavity of the bottom die close to the upper internal surface 21 are brought to levels of fluidity, progressively increasing over time, with a delay compared to the particles located in the lower internal surface 11.

Figures 2B-2D and 3B-3D illustrate three successive instants during steps b) and c) of the process:
- at the instant illustrated in figures 2B and 3B, the lowest layer of particles L has already begun to liquefy: the particles L closest to the lowest surface 11 have already formed a thin layer R in a sufficiently liquid phase such that the particles of material have lost their individuality and are fused together in a shapeless and substantially continuous mass;
- at the next instant, illustrated in figures 2C and 3C, a high proportion of the lowest layer of particles is L is transformed into the liquid state R;
- at the next instant illustrated in figures 2D and 3D, close to the final phase of closing of the die, almost all the material of the batch has been brought to a sufficiently fluid state R; the final portion of space inside the chamber of the die which has not yet reached the liquid state is placed adjacent to the upper surface 21, in particular in the vicinity of the air escape route F.

As can be seen, during steps b) and c), internally of the cavity 15 the material begins to liquefy starting from the zone close to the lower internal surface 11, forming a layer R that as its thickness increases incorporates the other layers; conversely, the layer arranged in the zone at the upper internal surface 21, reduces a thickness thereof and shrinks, staying in a less fluid state especially at the air escape route F position, which disappears in the final nearing step b).

An important consequence of the described time-differentiated fluidization imposed on the particles of the batch is that the interstitial air incorporated between the particles of the batch in the cavity 15 is effectively evacuated out of the cavity in step b).

In fact, as the particles L located close to the lower internal surface 11 pass into the liquid state (layer R), they expel the interstitial air due to the fact that the level of the liquid part under formation increases progressively in an upwards direction from an initial nil value; and then the liquid pushes the interstitial air upward, i.e. towards the zone located close to the upper internal surface 21 where the granules N are not yet liquefied, and then allow the passage of air towards the air escape route. The level of the growing liquid layer R moves progressively towards the upper internal surface 21 and the interstitial air can up to the last moments always escape through the layer of particles N that are not yet molten.

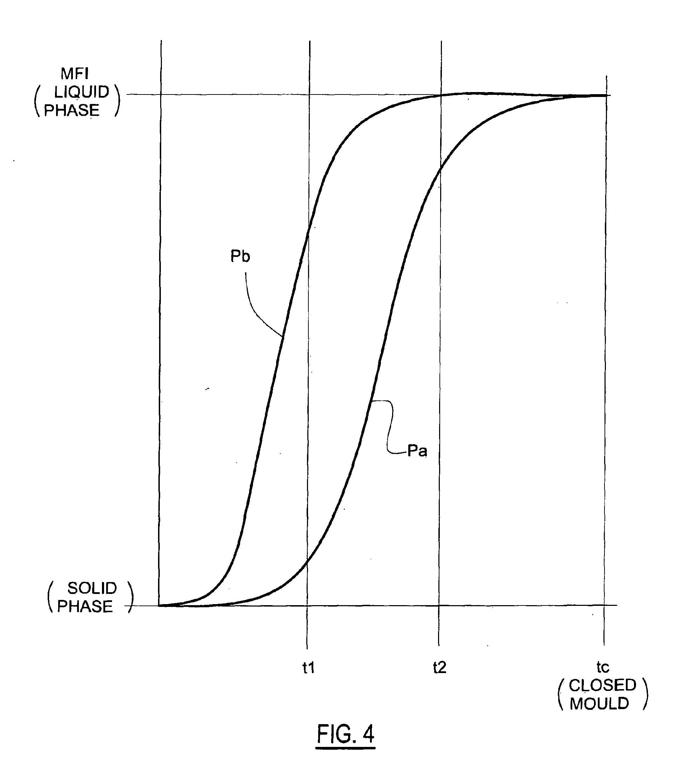

Figure 4 includes a chart in which the x axis shows the time during the approaching step of the two die parts up to the closing of the chamber (time tc), and on the y axis illustrates the degree of fluidity MFI (melt flow index). The graph shows two curves illustrating the different behaviour of two particles Pa and Pb located respectively in the zone close to the upper internal surface 21 and in the zone at the lower internal surface 11.

The two curves have different developments: point Pb has, at each instant of the period of time in which the die is closing, a greater degree of fluidity of point Pa (e.g. at instants t1 and t2), and only in the final moments do the two points Pa, Pb both reach a substantially liquid phase.

In the embodiment illustrated above with reference to figures 2 and 3, the described differentiated fluidization that is imposed on the particles of the batch is obtained, as already mentioned, by arranging a layer of particles having smaller dimensions L at the upper internal surface 21 and conversely arranging a layer of particles of greater dimensions N near the lower internal surface 11.

However, in another embodiment of the process, in the invention the above-described differentiated heating of the batch particles located at the upper internal surface 21 of the punch 20, is done in such a way that they are brought to fluidity values that grow over time with a delay with respect to the particles located at the lower internal surface 11 of the punch 10 (i.e. a fluidization effect differentiated over time that is substantially identical to what is described above) obtained thanks to the fact that during step b) the upper internal surface 21 of the punch is brought to temperature values that grow over time with a delay with respect to the lower internal surface 11 of the bottom die.

In particular, in a second embodiment, step c) of the process is carried out by heating the upper internal surface 21 with a heating means 42 that delivers heat with less power compared to a heating means 41 acting on the lower internal surface 11 (see figure 1).

Alternatively, according to a third embodiment, step c) of the process is carried out by heating the upper internal surface 21 with an initial time delay with respect to the lower internal surface 11. In this case, heating means 41, 42 can be used that provide heat with equal power.

In a fourth embodiment, in order to bring the upper internal surface 21 to temperature values increasing over time, with a delay compared to the lower internal surface 11, the die is dimensioned so that the wall defining the upper internal surface 21 exhibits greater thermal inertia than the wall defining the lower internal surface 11.

In the embodiment of the die illustrated in figure 1, the upper internal surface 21 is defined by a horizontal wall 22 which exhibits the contact surface 21 facing downwards. The lower internal surface 11 is instead defined by a horizontal wall 13 which exhibits the lower internal surface 11 facing upwards.

The wall 22 and possibly also a vertical lateral wall 14 horizontally exhibiting the contact surface 12 facing towards the inside of the cavity are therefore realized with a relatively large thickness H 1, such as to provide them with a relatively high thermal inertia; vice versa, the wall 13 is made with a relatively small thickness H2, such as to provide a relatively small thermal inertia. Thus, when heating the die during step b), with means that supply a substantially equal calorific power, due to their different thermal inertia, the upper internal surface 21 and the surface 14 closest to the air escape route are brought to temperature values that increase over time with a delay compared to lower internal surface 11.

The described four different embodiments of step c) can be applied one at a time, alternatingly, or two at a time, or three at a time, or all together, thus more greatly differentiating the described different heating of the particles of the batch.

For example, it is possible:
- to arrange the batch in the die cavity, in layers with granules of different sizes in accordance with the first embodiment;
- and/or at the same time, to heat the upper and lower surfaces 21 and 11 with heating means 41, 42 having different power ratings, in accordance with the second embodiment,
- and/or at the same time, to heat the lower internal surface 21 with an initial time delay with respect to the lower internal surfaces 11, in accordance with the third embodiment,
- and/or finally, to use a die dimensioned with internal upper and lower surfaces 21 and 11 having differentiated thermal inertia in accordance with the fourth embodiment.

All the described embodiments combine to make sure that the particles positioned in zones of the cavity of the bottom die closest to the upper internal surface 21 are brought to fluidity values, increasing over time, with a delay compared to the particles placed in zones B further away from the lower internal surface 11, thereby realizing an efficient evacuation of air from the interstitial cavity of the die.

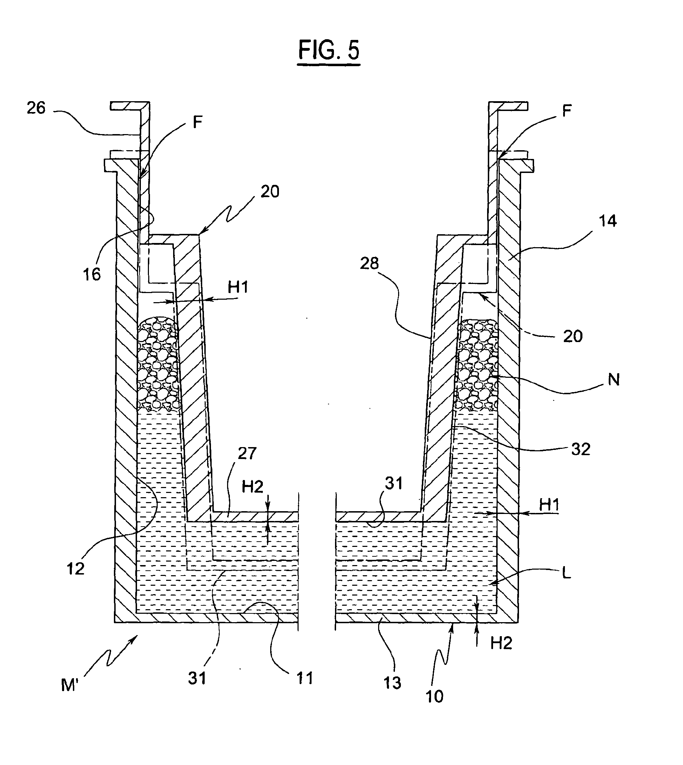

Whereas figures 1 and 2 illustrate a die M for producing a flat and relatively thin object (in the shape of a flat plate), figure 5 shows a second embodiment of the die M' for creating an object having a shape with relevant cavity (e.g. a container).

In this second embodiment of the die, the punch 20 comprises an active portion, which penetrates into the cavity 15 of the bottom die, formed by a horizontal bottom wall 27 and a lateral wall 28 with high vertical development, possibly inclined: the internal surfaces of this portion, i.e. the lower surface 31 of the bottom wall 27 and the lateral surface 32 of the lateral wall 28, define the active surface of the punch 20 which acts on the batch of thermoplastic material.

The active surface of the bottom die 10 of the die M' is defined, as with the die M, by the lateral surface 12 and the bottom surface 11.

The air escape F of the interstitial air, as with the die M, is defined at a peripheral area of the punch 20 where, at the end of step b), the punch 20 closes the cavity of the bottom die defining the forming chamber; in particular it is defined between the mutually-sliding surfaces of the punch 20 and the bottom die 10: that is, a vertical side surface 26, positioned at the periphery of the internal surface of the punch and a lateral surface 16 positioned at the mouth of the cavity 15 of the vertical bottom die, which is coupled with the surface 26 and is slidable relatively thereto.

In the die M', the upper internal surface is defined by the horizontal surface 31 to which the lower internal surface 1 is opposed.

Step c) of the process is then carried out by bringing the surfaces 31 and 32 to temperature values increasing over time with a delay compared to the contact surface 11, according to one or more embodiments of the process, described above with reference to the die M.

During the forming process, the central part of the cavity is heated and made fluid before compared to the peripheral area, so that the central mass of particles is first brought into the liquid phase and advances by moving toward the lateral zone, and finally moving its front in a vertical direction along the corridor delimited between the two surfaces 12 and 32. The temperature is lower here and the particles are the last to liquefy, thus realizing an effective evacuation of the interstitial air from the die cavity.

## Claims

1. A compression forming process of objects made of compact thermoplastic material, by means of a die comprising:
a bottom die (10) having a die cavity (15) suitable for containing a batch of material in a form of small pieces, delimited by a lower internal surface (11) facing upwards, which defines a lower base of the cavity (15), and by a lateral internal surface (12) facing towards the central zone of the cavity,
a punch (20), mobile with respect to the bottom die (10), having an internal surface (21, 31) facing downwards, which defines an upper base of the cavity,
the lower internal surface (11) and upper internal surface (21, 31) being opposite and neared to one another during step b),
an air escape route (F) from the bottom die (10), defined at a peripheral zone of the punch where the punch, at the end of step b), closes the bottom die cavity, defining the forming chamber,
the process comprising following steps:
a) inserting a batch of material in a form of small pieces in the cavity of the bottom die
b) nearing the two parts of the die to one another, reducing a volume of the cavity up to a minimum amount in which a forming chamber is defined that determines the shape of the object,
c) supplying heat to the particles of the batch, during step b), by heating the internal surfaces of the chamber of the bottom die and the punch with which the particles come into contact, increasing a degree of fluidity thereof with growing values over a period of time, starting from a minimum value at the start of step b) up to a maximum amount, at the end of step b), wherein step c) further comprises heating the particles of the batch in a differentiated way such that the particles situated near the upper internal surface (21, 31) are brought to values of fluidity, growing over time, with a delay with respect to particles located at the lower internal surface (11).

2. The process of claim 1, **characterised in that** step c) comprises bringing the upper internal surface (21, 31) to temperature values that grow over time with a delay with respect to the lower internal surface (11).

3. The process of claim 2, **characterised in that** in step c) the upper internal surface (21, 31) is heated with a calorific potential of lower than that of the lower internal surface (11).

4. The process of claim 2, **characterised in that** in step c) the upper internal surface (21, 31) is heated with a time delay with respect to the lower internal surface (11).

5. The process of claim 1, **characterised in that** step a) comprises: arranging particles of the batch having larger granules close to the upper internal surface (21, 31) and vice versa particles of the batch having granules of smaller dimension at the lower internal surface (11).

6. The process of claim 1, **characterised in that** the particles of the lower layer are brought to fluidity values more rapidly than the particles (N) of the upper layer so that fluidisation expansion starts from the central zone of the upper internal surface (21), with a direction facing towards the escape route (F).

## Patentansprüche

1. Verdichtungsformgebungsverfahren für Gegenstände, die aus kompaktem Thermoplastmaterial hergestellt werden, mittels einer Pressform, die Folgendes umfasst:
eine untere Form (10) mit einem Formhohlraum (15), der dafür geeignet ist, eine Ladung Material in Form von kleinen Stücken zu enthalten, begrenzt durch eine untere Innenfläche (11), die nach oben weist und eine untere Basis des Hohlraumes (15) definiert, und durch eine seitliche Innenfläche (12), die zum mittleren Bereich des Hohlraumes weist,
ein Presswerkzeug (20), das im Verhältnis zur unteren Form (10) beweglich ist und eine Innenfläche (21, 31) aufweist, die nach unten weist und eine obere Basis des Hohlraumes definiert,
wobei sich die untere Innenfläche (11) und die obere Innenfläche (21, 31) gegenüber liegen und sich während Schritt b) einander nähern,
einen Luftaustrittsweg (F) aus der unteren Form (10), der durch einen Umfangsbereich des Presswerkzeugs definiert ist, wobei das Presswerkzeug am Ende von Schritt b) den unteren Formhohlraum verschließt, was die Formgebungskammer definiert,
wobei das Verfahren folgende Schritte umfasst:
a) Einführen einer Ladung Material in Form kleiner Stücke in den Hohlraum der unteren Form,
b) Aneinanderannähern der zwei Teile der Form, Verringern eines Volumens des Hohlraumes bis auf einen Minimalwert, bei dem eine Formgebungskammer definiert wird, welche die Form des Gegenstandes bestimmt,
c) Zuführen von Wärme zu den Partikeln der Ladung während Schritt b) durch Erwärmen der Innenflächen der Kammer der unteren Form und des Presswerkzeugs, mit denen die Partikel in Kontakt kommen, Erhöhen von deren Fluiditätsgrad mit zunehmenden Werten über eine Zeitspanne, ausgehend von einem Minimalwert zu Beginn von Schritt b) bis zu einem Maximalwert am Ende von Schritt b), wobei Schritt c) ferner das Erwärmen der Partikel der Ladung in einer differenzierten Weise umfasst, so dass die Partikel, die sich nahe der oberen Innenfläche (21, 31) befinden, mit einer Verzögerung im Verhältnis zu den Partikeln, die an der unteren Innenfläche (11) angeordnet sind, auf Fluiditätswerte gebracht werden, die mit der Zeit zunehmen.

2. Verfahren nach Anspruch 1, **dadurch gekennzeichnet, dass** Schritt c) das Bringen der oberen Innenfläche (21, 31) auf Temperaturwerte, die mit der Zeit zunehmen, mit einer Verzögerung im Verhältnis zur unteren Innenfläche (11) umfasst.

3. Verfahren nach Anspruch 2, **dadurch gekennzeichnet, dass** die obere Innenfläche (21, 31) in Schritt c) mit einem Heizwert erwärmt wird, der geringer als der für die untere Innenfläche (11) ist.

4. Verfahren nach Anspruch 2, **dadurch gekennzeichnet, dass** die obere Innenfläche (21, 31) in Schritt c) mit einer Zeitverzögerung im Verhältnis zur unteren Innenfläche (11) erwärmt wird.

5. Verfahren nach Anspruch 1, **dadurch gekennzeichnet, dass** Schritt c) Folgendes umfasst: Anordnen von Partikeln der Ladung mit größerer Körnung nahe der oberen Innenfläche (21, 31) und umgekehrt: Anordnen von Partikeln der Ladung mit kleinerer Körnung an der unteren Innenfläche (11).

6. Verfahren nach Anspruch 1, **dadurch gekennzeichnet, dass** die Partikel der unteren Schicht schneller auf Fluiditätswerte gebracht werden, als die Partikel (N) der oberen Schicht, so dass die Fluidisierungsausdehnung am Mittelbereich der oberen Innenfläche (21) beginnt, mit einer Richtung hin zum Austrittsweg (F).

## Revendications

1. Processus de formage par compression d'objets constitués d'un matériau thermoplastique compact, à l'aide d'une matrice comprenant :
une matrice de fond (10) comportant une cavité de matrice (15) adaptée pour contenir un lot de matériau sous forme de petits morceaux, délimitée par une surface interne inférieure (11) tournée vers le haut qui définit une base inférieure de la cavité (15), et par une surface interne latérale (12) tournée vers la zone centrale de la cavité,
un poinçon (20) mobile par rapport à la matrice de fond (10), comportant une surface interne (21, 31) tournée vers le bas et définissant une base supérieure de la cavité,
la surface interne inférieure (11) et la surface interne supérieure (21, 31) étant opposées et rapprochées entre elles lors de l'étape b),
une voie de sortie d'air (F) de la matrice de fond (10), définie dans une zone périphérique du poinçon où le poinçon, à la fin de l'étape b), ferme la cavité de la matrice de fond, définissant la chambre de formage,
le processus comprenant les étapes suivantes :
a) insertion d'un lot de matériau sous forme de petits morceaux dans la cavité de la matrice de fond,
b) rapprochement mutuel des deux parties de la matrice, ce qui réduit un volume de la cavité jusqu'à une quantité minimale dans laquelle une chambre de formage est définie qui détermine la forme de l'objet,
c) apport de chaleur aux particules du lot à l'étape b) en chauffant les surfaces internes de la chambre de la matrice de fond et le poinçon avec lesquels les particules entrent en contact, en augmentant le degré de fluidité de celles-ci avec des valeurs croissantes sur une période de temps, en commençant depuis une valeur minimale au début de l'étape b) jusqu'à une quantité maximale à la fin de l'étape b),
dans lequel l'étape c) comprend en outre le chauffage des particules du lot de manière différentiée de telle sorte que les particules situées près de la surface interne supérieure (21, 31) sont amenées à des valeurs de fluidité qui augmentent au fil du temps, avec un délai par rapport aux particules situées sur la surface interne inférieure (11).

2. Processus selon la revendication 1, **caractérisé en ce que** l'étape c) comprend l'amenée de la surface interne supérieure (21, 31) à des valeurs de température qui augmentent au fil du temps, avec un délai par rapport à la surface interne inférieure (11).

3. Processus selon la revendication 2, **caractérisé en ce qu'**à l'étape c), la surface interne supérieure (21, 31) est chauffée avec un potentiel calorifique inférieur à celui de la surface interne inférieure (11).

4. Processus selon la revendication 2, **caractérisé en ce qu'**à l'étape c), la surface interne supérieure (21, 31) est chauffée avec un délai par rapport à la surface interne inférieure (11).

5. Processus selon la revendication 1, **caractérisé en ce que** l'étape a) comprend : l'agencement des particules du lot qui ont des granulés plus grands près de la surface interne supérieure (21, 31), et inversement des particules du lot qui ont des granulés de plus petite dimension sur la surface interne inférieure (11).

6. Processus selon la revendication 1, **caractérisé en ce que** les particules de la couche inférieure sont amenées à des valeurs de fluidité plus rapidement que les particules (N) de la couche supérieure, de telle sorte que l'expansion de fluidisation commence à partir de la zone centrale de la surface interne supérieure (21), en direction de la voie de sortie (F).
